# EUROPEAN PATENT APPLICATION

(11) **EP 1 443 378 A2**
(43) Date of publication of application: **04.08.2004**
(21) Application number: 03017970.9
(22) Date of filing: 06.08.2003
(51) Int. Cl.: G06F 1/00

(54) **Information Processing Apparatus and User Operation Restriction Method used in the Same**

(30) Priority: 30.01.2003 JP 2003022156
(71) Applicant: Kabushiki Kaisha Toshiba, Tokyo (JP)
(72) Inventor: Kawakami, Tomoyuki, c/o Toshiba Corporation, Minato-ku, Tokyo 105-8001 (JP)
(74) Representative: Henkel, Feiler & Hänzel

(57) **Abstract**

An information processing apparatus, to which a token device (21) is detachably connected, includes a unit (101, S111) that stores, in the token device (21) connected to the information processing apparatus, token data including verification information for permitting use of the information processing apparatus and policy information for restricting operations of a user who uses the information processing apparatus. The information processing apparatus further includes a unit (101, S303, S304,S305) that determines, upon power-on of the information processing apparatus, whether use of the information processing apparatus is to be permitted or not, on the basis of the verification information stored in the token device (21), and a unit (101, S308) that restricts, when it is determined that the use of the information processing apparatus is permitted, functions of the information processing apparatus that can be used by the user, on the basis of the policy information stored in the token device (21) connected to the information processing apparatus.

## Description

The present invention relates to an information processing apparatus such as a personal computer, and to a user operation restriction method used in the apparatus.

In general, an information processing apparatus such as a personal computer is provided with a security function.

A user verification function using a password is known as one of typical security functions. The use of a personal computer is permitted only when the user inputs, by a keyboard operation, a password that is identical to a password pre-registered in the personal computer.

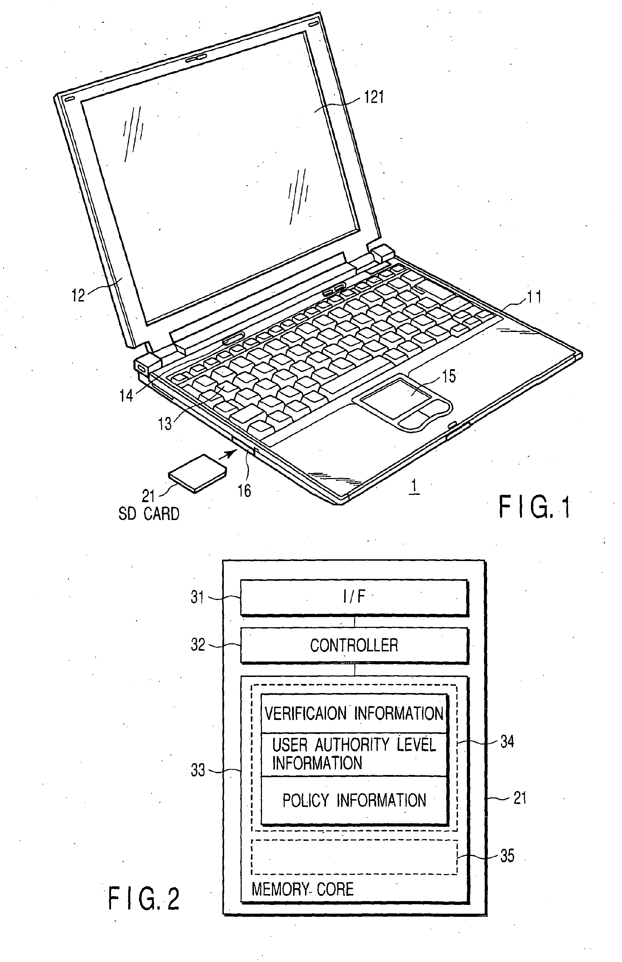

Jpn. Pat. Appln. KOKAI Publication No. 2002-268766 (page 2, FIG. 1) discloses a user verification system .using a password read from an external storage device. In this system, a password stored in the external storage device is used, instead of password input by the user. The activation of the system is permitted when the password read from the external storage device coincides with the password pre-registered in the computer. This prevents problems due to forgetting of a password or an erroneous password input operation.

In the above system, however, the data stored in the external storage device is only the password. A verification process that is executable by using the external storage device is only a process for determining whether the system activation is to be permitted or not. The user's operations cannot be restricted.

A multi-user system, in which a computer is used by more than one person, is required to have a function of restricting executable operations of each user in accordance with each user's authority level. To realize this function, an operation needs to be performed to preset, in the computer, operation restriction information associated with each of the plural users.

Recently, an environment in which each of a plurality of computers is shared by more than one person has increasingly been created in offices. In this case, in order to restrict executable operations of each user, time-consuming operations need to be performed to set, in each computer, operation restriction information associated with each of plural users, thus leading to an increase in management cost.

The object of the present invention is to provide an information processing apparatus and a user operation restriction method, which can restrict executable operations of each user, without an operation to set operation restriction information.

According to an embodiment of the present invention, there is provided an information processing apparatus comprising: means for storing, in the token device, token data including verification information for permitting use of the information processing apparatus and policy information for restricting operations of a user who uses the information processing apparatus; means for determining whether use of the information processing apparatus is to be permitted or not, on the basis of the verification information stored in the token; and means for restricting, when the determining means determines that the use of the information processing apparatus is permitted, functions of the information processing apparatus that can be used by the user who uses the information processing apparatus, on the basis of the policy information stored in the token device.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows an external appearance of a computer according to an embodiment of the present invention, with the display of the computer being opened;
FIG. 2 is a view for explaining an example of SD token used as a token device in the computer according to the embodiment;
FIG. 3 is a block diagram showing an example of the system configuration of the computer according to the embodiment;
FIG. 4 shows an example of a verification dialog screen used in the computer according to the embodiment;
FIG. 5 shows an example of a user password tab displayed on a main dialog screen used in the computer according to the embodiment;
FIG. 6 shows an example of a supervisor password tab displayed on the main dialog screen used in the computer according to the embodiment;
FIG. 7 shows an example of a token creation dialog screen used in the computer according to the embodiment;
FIG. 8 shows an example of a user policy setting dialog screen used in the computer according to the embodiment;
FIG. 9 is a flow chart illustrating an example of the procedure of an SD token creation process executed by the computer according to the embodiment;
FIG. 10 is a flow chart illustrating an example of the procedure of a user policy setting/changing process executed by the computer according to the embodiment; and
FIG. 11 is a flow chart illustrating an example of the procedure of a user verification process executed by the computer according to the embodiment.

An embodiment of the present invention will now be described with reference to the accompanying drawings. To begin with, the external appearance of an information processing apparatus according to the embodiment will be described. The information processing apparatus is realized as a notebook type personal computer 1.

FIG. 1 is a front view of the computer 1 in the state in which a display unit thereof is opened. The computer 1 comprises a computer main body 11 and a display unit 12. A display device 121 composed of an LCD (Liquid Crystal Display) is provided in the display unit 12. The LCD 121 is positioned at a substantially central area of the display unit 12.

The display unit 12 is attached to be rotatable between an open position and a closed position relative to the computer main body 11. The computer main body 11 has a thin box-shaped casing. A keyboard 13, a power button 14 for switching on/off the computer 1 and a touch pad 15, etc. are disposed on the upper surface of the computer main body 11.

A slot 16 serving as a token input, for detachable attachment of a token device is provided on a side surface of the computer main body 11. The token device is an external memory device for storing token data for verification. The token device comprises a removable memory device such as a memory card. In the description below, for example, an SD (Secure Digital) card 21 is used as the token device.

The SD card 21 is a small-sized memory card device (SD token card) storing token data for verification. The slot 16 is configured to permit detachable attachment or connection of the SD card 21. Each user can use the SD card 21 associated individually with the user, instead of typing his/her password through the keyboard 13.

FIG. 2 shows the structure of the SD card 21. The SD card 21, as shown in FIG. 2, comprises an SD interface 31, a controller 32 and a memory core 33. The SD interface 31 is an interface circuit for communication with the computer 1. The computer 1 functions as a host device of the SD card 21. The controller 32 executes access to the memory core 33 in response to a command input from the host via the SD interface 31. The memory core 33 is composed of a nonvolatile memory such as a flash EEPROM.

A first memory area 34 and a second memory area 35 are assigned in the memory core 33. The first memory area 34 is a memory area that is inaccessible from a file system executed by the computer. The first memory area 34 can be accessed only by software having a dedicated card verification function corresponding to the security function of the SD card 21. The second memory area 35 is a data storage area that can be freely accessed by the file system. Thus, the SD card 21 can serve as an ordinary data storage device. The file system recognizes the SD card 21 as a disk drive.

The first memory area 34 is used to store token data. The token data includes verification information, user authority level information and policy information.

The verification information stored in the SD card 21 is information for verification as to whether the use of the computer 1 is permitted or not. The verification information represents a use right of the computer 1. Each of users who can use the computer 1 has his/her own SD card 21. Each user of the computer 1 is verified by the verification information stored in the SD card 21.

A verification process using the verification information stored in the SD card 21 is executed in response to power-on of the computer 1. The verification process determines whether use of the computer 1 is to be permitted or not. In accordance with a determination result, the activation (boot or resume) of the computer 1 is permitted or prohibited.

The user authority level information stored in the SD card 21 indicates the authority level of the user who possesses the SD card 21. The user authority levels are, for example,
1. supervisor,
2. power user, and
3. user.

For example, when two user authority levels of "supervisor" and "user" are used, the kinds of SD token to be used are, in general terms, a "supervisor" token and a "user" token. In the examples below registration verification and policy information is described in reference to only tow classes of users, namely the "supervisor" and the "user". It is understood, however, that embodiments of the invention apply equally well to three or more classes of users or user authority levels.

The policy information stored in,the SD card 21 is information for restricting executable operations of the user possessing the SD card 21, and it defines operations that can be executed by the user. Specifically, the policy information is indicative of whether the user is permitted to use each of a plurality of predetermined functions of the computer 1.

Each user whose authority level is "supervisor", that is, each user having the "supervisor" token, is the manager of the computer 1. He/she is permitted to user all functions of the computer 1 by the policy information stored in the "supervisor" token. On the other hand, each user whose authority level is "user", that is, each user having the "user" token, is permitted to use only restricted functions of the computer 1 by the policy information stored in the "user" token.

The "supervisor" user can set/change policy information content to be stored in a "user" token that is newly created. Thereby, the operations that can be used by each user, whose authority level is the "user", can be restricted. The functions of the computer 1, which can be used by each user whose authority level is the "user", that is, each user having the "user" token, are determined by the policy information content stored in the "user" token possessed by the "user".

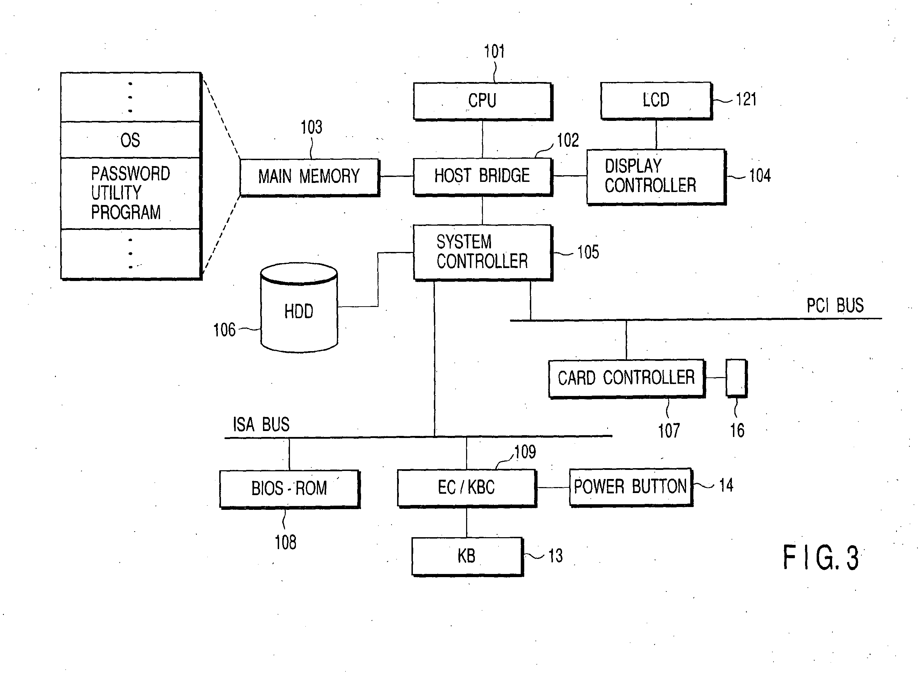

The system configuration of the computer 1 will now be described with reference to FIG. 3.

The computer 1, as shown in FIG. 3, includes a CPU 101, a host bridge 102, a main memory 103, a display controller 104, a system controller 105, a hard disk drive (HDD) 106, a card controller 107, a BIOS-ROM 108, and an embedded controller/keyboard controller IC (EC/KBC) 109.

The CPU 101 is a processor provided to control the operations of the computer 1. The CPU 101 executes an operating system (OS) and various application/utility programs loaded in the main memory 103 from the hard disk drive (HDD) 106. The CPU 101 also executes a BIOS (Basic Input/Output System) stored in the BIOS-ROM 108.

The BIOS is a program for controlling the hardware of the computer 1. The BIOS has a hardware setup function (also called "BIOS setup function") for altering the setting of the operational environment of the computer 1. The user, who is permitted to use the hardware setup function by the policy information, can perform, for example, an enable/disable setting of each device of the computer 1, a power-up mode (boot mode/resume mode) setting of the computer 1, and a power-saving mode setting of the CPU 101.

In the computer 1, a password utility program is pre-installed as one of plural utility programs. The password utility program is a program for realizing verification using the SD token. The password utility program has 1) a "supervisor"/"user" password registration function, 2) a policy information setting/changing function, 3) an SD token creating function, and 4) a user verification/user operation restriction function.

The "supervisor"/"user" password registration function is a function of registering a password in the computer 1. In the case of two levels of authority, the kinds of passwords that can be registered in the computer 1 are: a "supervisor" password and a "user" password. The "supervisor" password is a password for verifying whether the user of the computer 1 is an authorized user having the "supervisor" authority level. The "user" password is a password for verifying whether the user of the computer 1 is an authorized user having the "user" authority level.

The user verification/user operation restriction function of the password utility program is executed in cooperation with the BIOS. If the "supervisor" password is already registered in the computer 1, only the user verified as "supervisor" ("supervisor" user) is permitted to use the function of setting/changing the policy information.

The host bridge 102 is a bridge device that connects the local bus of the CPU 101 and the system controller 105. The host bridge 102 includes a memory controller that controls access to the main memory 103. The display controller 104 controls the LCD 121 used as a display monitor of the computer 1.

The system controller 105 controls each device on a PCI bus and each device on an ISA bus. The system controller 105 includes an IDE controller for controlling the HDD 106.

The card controller 107 is an SD host controller configured to control an SD card 21 inserted in the card slot 16. The BIOS/ROM 108 stores the BIOS. The BIOS-ROM 108 is composed of a flash EEPROM. The "supervisor" password and "user" password registered in the computer 1 are stored, for example, in the BIOS-ROM 108. When the SD token ("supervisor" token or "user" token) is created, token identification information for identifying the created SD token is stored in the BIOS-ROM 108 in association with the "supervisor"/"user" password. Specifically, if the created SD token is the "supervisor" token, the token identification information corresponding to the SD token is stored in association with the "supervisor" password in the BIOS-ROM 108. If the created SD token is the "user" token, the token identification information corresponding to the SD token is stored in association with the "user" password in the BIOS-ROM 108.

The BIOS-ROM 108 also stores user authority level information and policy information in association with the "supervisor"/"user" password. The user authority level information indicates whether the registered password is a "supervisor" password or a "user" password. The policy information is default operation-restriction information for specifying functions that can be executed by the "supervisor" and "user". The policy information is used to restrict the functions that can be executed by the user who is verified by typing the same password as the registered password. In short, the user authority level information and policy information stored in the BIOS-ROM 108 is used to restrict the operations that can be executed by the user who is verified by typing the password. On the other hand, the operations that can be executed by the user who is verified by the SD token are restricted by the user authority level information and policy information stored in the SD token.

The "supervisor"/"user" password, token identification information, user authority level information and policy information may be stored in a specified part of the storage area in the HDD 106, and not in the BIOS-ROM 108.

The embedded controller/keyboard controller IC (EC/KBC) 109 is a one-chip microcomputer in which an embedded controller for power management and a keyboard controller for controlling the keyboard 13 are integrated. The embedded controller/keyboard controller IC (EC/KBC) 109 has a function of powering on/off the computer 1 in accordance with the operation of the power button 14 by the user.

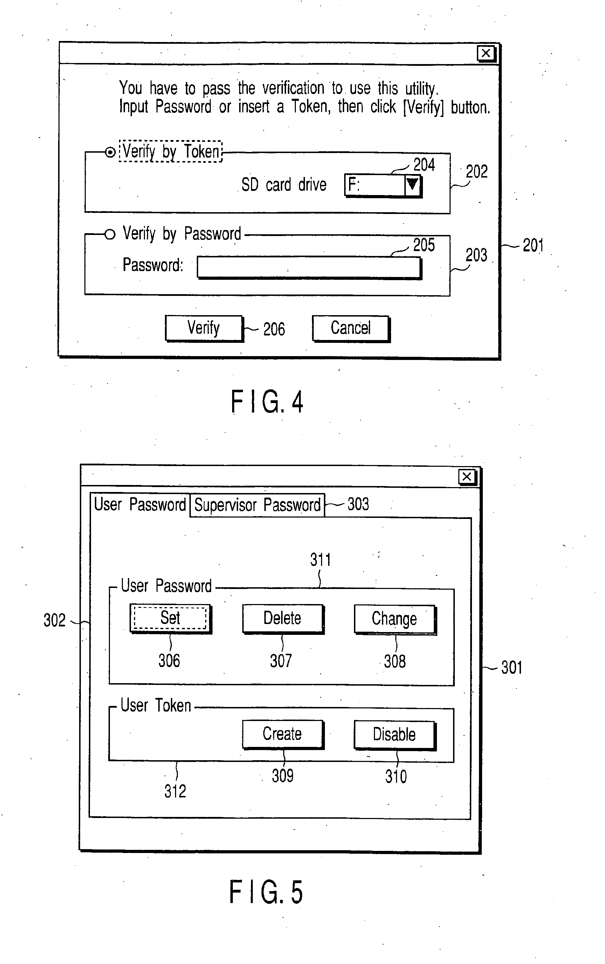

Each of the functions of the password utility program will now be described with reference to FIGS. 4 to 10.

FIG. 4 shows a verification dialog 201 displayed on the LCD 121 by the password utility program. When the password utility program is activated by the user, the password utility program first displays the verification dialog 201. The verification dialog 201 is a screen for verifying the user who uses the password utility program.

The verification dialog 201 provides two methods for user verification. One is to use password input, and the other is to use an SD token. In the verification dialog 201, a token verification area 202 and a password verification area 203 are arranged. The token verification area 202 and password verification area 203 are provided with radio buttons. The verification method corresponding to the radio button, which is clicked by the user, is rendered effective.

The token verification area 202 is provided with a pull-down menu 204 that prompts the user to designate the disk drive number of the SD card 21. In the case where the token verification is effective, when a [Verify] button 206 on the verification dialog 201 is clicked by the user, the password utility program accesses the disk drive of the drive number designated in the pull-down menu 204. Thereby, token data is read from the SD card 21. Based on the content of the token data, the password utility program can discriminate whether the user who has activated the program is the "supervisor" or "user".

The password verification area 203 includes a password input field 205. When password verification is performed, the user inputs his/her password by typing through the keyboard 13, and then clicks the [Verify] button 206. The password utility program checks whether the input password coincides with the "supervisor" password or the "user" password registered in the computer 1. Thereby, the password utility program can discriminate whether the user who has activated the program is the "supervisor" or "user".

After the user verification using the verification dialog 201 is executed, the password utility program first displays a main dialog 301 shown in FIG. 5. The main dialog 301 shown in FIG. 5 is a main operation screen provided by the password utility program.

As is shown in FIG. 5, the main dialog 301 includes two tabs, i.e. a [User Password] tab 302 and a [Supervisor Password] tab 303. The [User Password] tab 302 provides a user password function for setting, deleting and changing the "user" password, and a user token function relating to creation and disabling of the "user" token.

A [User Password] area 311 on the [User Password] tab 302 includes a [Set] button 306, a [Delete] button 307 and a [Change] button 308. The [Set] button 306 is an operation button for registering the "user" password in the computer 1. The [Delete] button 307 is an operation button for deleting the "user" password registered in the computer 1. The [Change] button 308 is an operation button for changing the "user" password registered in the computer 1.

A [User Token] area 312 on the [User Password] tab 302 includes a [Create] button 309 and a [Disable] button 310. The [Create] button 309 is.an operation button for creating a "user" token. The [Disable] button 310 is an operation button for disabling an already created "user" token. When the [Disable] button 310 is clicked, the password utility program deletes the token identification information registered in the computer 1 along with the "user" password.

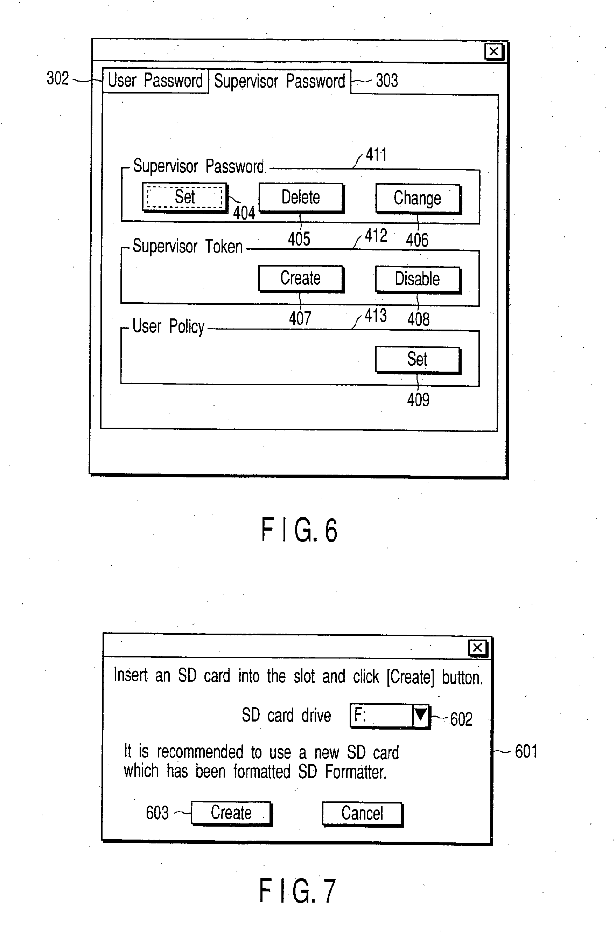

Referring now to FIG. 6, the structure of the [Supervisor Password] tab 303 displayed on the main dialog 301 shown in FIG. 5 will be described.

The [Supervisor Password] tab 303 provides a supervisor password function for setting, deleting and changing the "supervisor" password, a supervisor token function relating to creation and disabling of the "supervisor" token, and a user policy setting/changing function. Only the user, who is verified as "supervisor'', is permitted to use these functions.

As is shown in FIG. 6, a [Supervisor Password] area 411 on the [Supervisor Password] tab 303 includes a [Set] button 404, a [Delete] button 405 and a [Change] button 406. The [Set] button 404 is an operation button for registering the "supervisor" password in the computer 1. The [Delete] button 405 is an operation button for deleting the "supervisor" password registered in the computer 1. The [Change] button 406 is an operation button for changing the "supervisor" password registered in the computer 1.

A [Supervisor Token] area 412 on the [Supervisor Password] tab 303 includes a [Create] button 407 and a [Disable] button 408. The [Create] button 407 is an operation button for creating a "supervisor" token. The [Disable] button 408 is an operation button for disabling an already created "supervisor" token. When the [Disable] button 408 is clicked, the password utility program deletes the token identification information registered in the computer 1 along with the "supervisor" password.

A [User Policy] area 413 on the [Supervisor Password] tab 303 includes a [Set] button 409. The [Set] button 409 is an operation button for setting/changing the content of policy information to be stored in the "user" token. A default value of the content of policy information to be stored in the "user" token is preset. The "Supervisor" can change, as desired, the content of policy information to be stored in the "user" token.

FIG. 7 illustrates a token creation dialog 601. When the [Create] button 309 or 407 displayed [User Password] tab 302 or [Supervisor Password] tab 303 on the main dialog shown in FIG. 5 is clicked, the password utility program displays the token creation dialog 601 shown in FIG. 7.

The "supervisor" can create both the "user" token and "supervisor" token. The "user" can create only the "user" token.

As is shown in FIG. 7, the token creation dialog 601 is provided with a pull-down menu 602 that prompts the user to designate the disk drive number of the SD card 21. The SD card 21 has to be formatted before creation of the SD token. When a [Create] button 603 on the token creation dialog 601 is clicked, the password utility program stores token data in the SD card 21, thereby creating the SD token ("user" token or "supervisor" token).

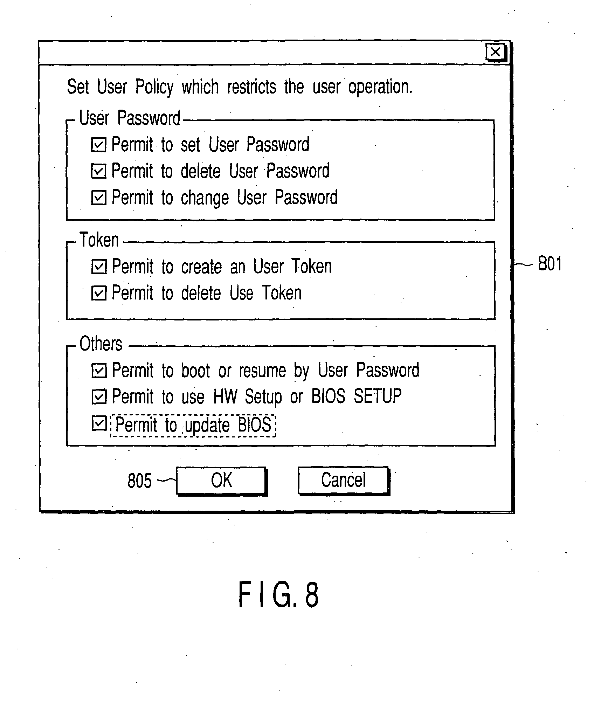

FIG. 8 shows a user policy setting dialog 801. The user policy setting dialog 801 is a screen for setting/changing the policy information content to be written in the "user" token.

When the [Set] button 409 in the [User Policy] area 413 on the [Supervisor Password] tab 303 in FIG. 6 is clicked, the password utility program displays the user policy setting dialog 801 shown in FIG. 8. As is shown in FIG. 8, the user policy setting dialog 801 includes a plurality of setting items for enabling/disabling execution of each of a plurality of functions of the computer 1. Each setting item is provided with a check box for enabling execution of the associated operation. The meanings of the respective setting items are as follows:
[Permit to set User Password]: This setting item designates whether the user is permitted to perform on the main dialog 301 the operation for registering the "user" password.
[Permit to delete User Password]: This setting item designates whether the user is permitted to perform on the main dialog 301 the operation for deleting the "user" password.
[Permit to change User Password]: This setting item designates whether the user is permitted to perform on the main dialog 301 the operation for changing the "user" password.
[Permit to create User Token]: This setting item designates whether the user is permitted to perform on the main dialog 301 the operation for creating the "user" token.
[Permit to delete User Token]: This setting item designates whether the user is permitted to perform on the main dialog 301 the operation for disabling the "user" token.
[Permit to boot or resume by User Password]: This setting item designates whether the verification at the time of booting or resuming the computer 1 is permitted by using the "user" password. If this setting item is not checked, only the "supervisor" password can be used for verification at the time of boot or resume.
[Permit to use HW Setup or BIOS Setup]: This setting item designates whether the user is permitted to use a hardware setup function (or a BIOS setup function) of the computer 1. If this setting item is not checked, only the "supervisor" is permitted to perform the operation for changing a setting of the operational environment of the computer 1 using the hardware setup function (or BIOS setup function).
[Permit to update BIOS]: This setting item designates whether the user is permitted to use a BIOS updating function for updating the BIOS of the computer 1. If this setting item is not checked, only the "supervisor" is permitted to use the BIOS updating function.

As has been described above, the policy information stored in the SD token is a set of rules for restricting the "user" operations. Only the "supervisor" can set/change the content of policy information on the user policy setting dialog 801.

If an [OK] button 805 on the user policy setting dialog 801 is clicked, the password utility program generates new policy information in accordance with the presence/absence of check marks in the check boxes on the user policy setting dialog 801. The policy information is stored in the BIOS-ROM 108 as policy information for a newly created "user" token. When a "user" token is created, the policy information stored in the BIOS-ROM 108 is written in the SD card 21.

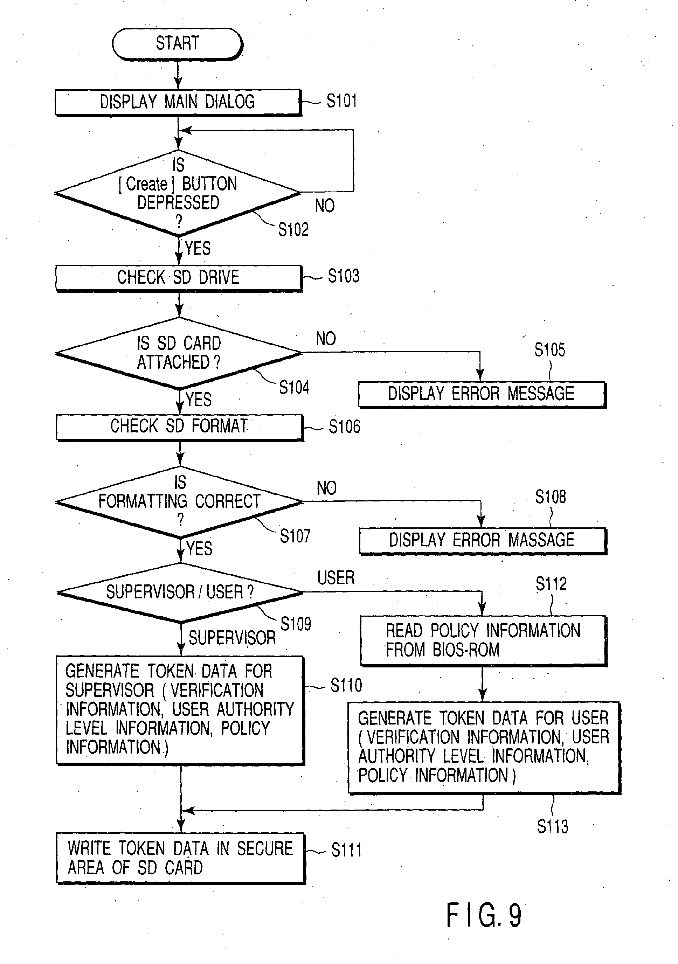

Next, referring to a flow chart of FIG. 9, a description will be given of the procedure of an SD token creation process executed by the password utility program. In the description below, it is assumed that whether the current user is the "user" or "supervisor" is already verified by the password utility program, for example, on the [Verification] dialog 201.

To start with, the password utility program displays the main dialog 301 (shown in FIG. 5) on the LCD 121 (step S101). When the [Create] button 309 in the [User Token] area 312 displayed in the [User Password] tab 302 on the main dialog 301, or the [Create] button 407 in the [Supervisor Token] area 412 displayed in the [Supervisor Password] tab 303, is clicked (YES in step S102), the password utility program determines whether or not the SD card 21 is attached (connected) to the computer 1 (step S103, S105). If the SD card 21 is not.attached (NO in step S104), the password utility program displays on the LCD 121 an error message prompting attachment of the SD card (step S105).

If the SD card is attached (YES in step S104), the password utility program determines whether or not the SD card 21 is correctly formatted (step S106, S107). If the SD card 21 is not correctly formatted (NO in step S107), the password utility program causes the LCD 121 to display an error message prompting attachment of a correctly formatted SD card (step S108).

If the SD card 21 is correctly formatted (YES in step S107), the password utility program starts an SD token creation process.

To begin with, the password utility program discriminates whether the button clicked in step S102 is the [Create] button 407 in the [Supervisor Token] area 412 or the [Create] button 309 in the [User Token] area 312, thereby determining whether the SD token, the creation of which has been requested, is a "supervisor" token or a "user" token (step S109). Only the user verified as "supervisor" is permitted to create the "supervisor" token.

If the SD token, the creation of which has been requested, is the "supervisor" token, the password utility program creates supervisor token data (step S110). In step S110, verification information for the "supervisor" token is first generated. The verification information for the "supervisor" token is generated, for example, on the basis of the "supervisor" password registered in the computer 1. Further, user authority level information indicating that the user authority level is "supervisor" and policy information indicating that all functions are usable is prepared. Then, the password utility program writes in the first memory area 34 of SD card 21 the token data including the verification information, user authority level information and policy information (step S111). In step S111, a process is also performed to write in the BIOS-ROM 108 the token identification information corresponding to the created "supervisor" token in association with the "supervisor" password.

If the SD token, the creation of which has been requested, is the "user" token, the password utility program reads out of the BIOS-ROM 108 the current content of the policy information for the "user" token (step S112). Then, the password utility program generates user token data (step S113). In step S113, verification information for the "user" token is first generated. The verification information for the "user" token is generated, for example, on the basis of the "user" password registered in the computer 1. Further, user authority level information indicating that the user authority level is "user" and policy information is prepared. This policy information is the policy information for the "user" token read out from the BIOS-ROM 108. Then, the password utility program writes in the first memory area 34 of SD card 21 the token data including the verification information, user authority level information and policy information (step S111). In step S111, a process is also performed to write in the BIOS-ROM 108 the token identification information corresponding to the created "user" token in association with the "user" password.

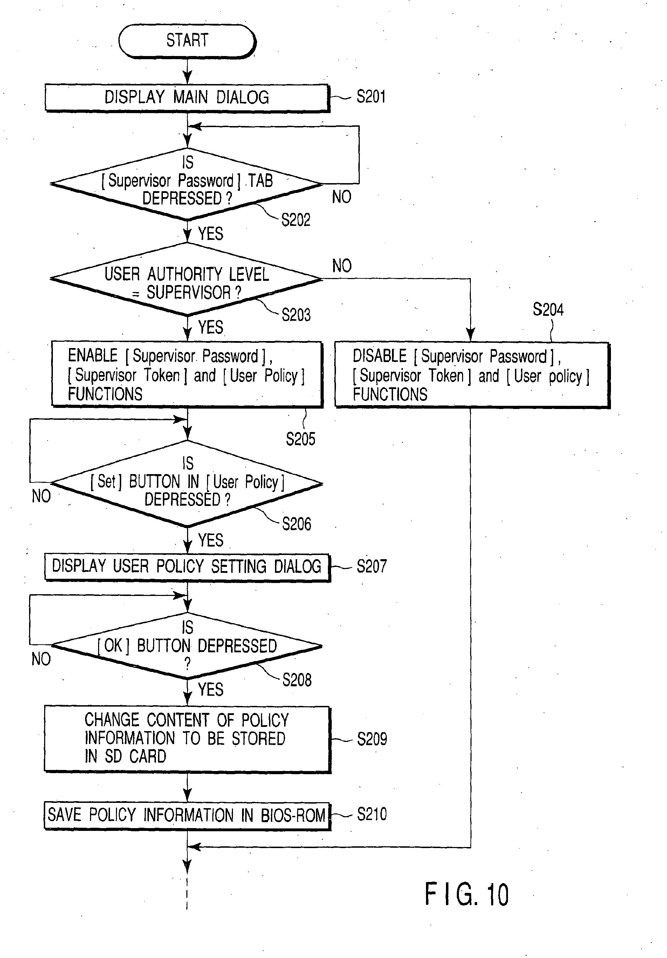

Next, referring to a flow chart of FIG. 10, the procedure of a user policy setting/changing process executed by the password utility program will be described. In the description below, it is assumed that whether the current user is the "user" or "supervisor" is already verified, for example, on the [Verification] dialog 201 shown in FIG. 4.

To start with, the password utility program displays the main dialog 301 (shown in FIG. 5) on the LCD 121 (step S201). When the [Supervisor Password] tab 303 on the main dialog 301 is clicked (YES in step S202), the password utility program determines whether the current user is verified as "supervisor" or "user" (step S203).

If the current user is verified as "user" (NO in step S203), the password utility program disables all of the supervisor password function, supervisor token function and user policy setting/changing function on the [Supervisor Password] tab 303 (step S204). In this case, all buttons on the [Supervisor Password] tab 303 are not displayed.

If the current user is verified as "supervisor" (YES in step S203), the password utility program enables all of the supervisor password function, supervisor token function and user policy setting/changing function on the [Supervisor Password] tab 303 (step S205). In this case, all buttons on the [Supervisor Password] tab 303 are displayed as shown in FIG. 6.

If the [Set] button 409 displayed in the [User Policy] area 413 on the [Supervisor Password] tab 303 in FIG. 6 is clicked (YES in step S206), the password utility program displays the user policy setting dialog 801 shown in FIG. 8 (step S207). The "supervisor" can designate whether the "user" is to be permitted to use each of a plurality of functions on the user policy setting dialog 801.

If the [OK] button 805 on the user policy setting dialog 801 is clicked (YES in step S208), the password utility program changes the content of,the policy information to be stored in the "user" token in accordance with the presence/absence of check marks in the check boxes on the user policy setting dialog 801 (step S209). Then, the password utility program saves the changed policy information content in the BIOS-ROM 108 as new "user" token policy information to be stored in a newly created "user" token (step S210). Thereby, the content of the policy information for the "user" token, which is stored in the BIOS-ROM 108 in association with the "user" password, is updated.

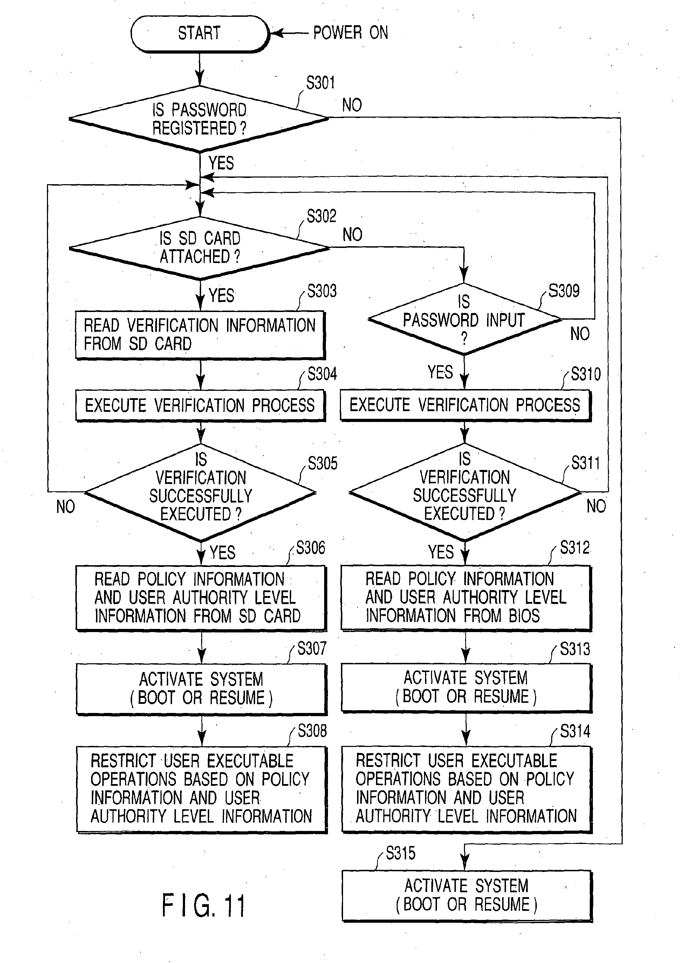

The user verification process executed by the BIOS upon power-on of the computer 1 will now be described with reference to a flow chart of FIG. 11.

When the power button 14 is turned on, the computer 1 is powered on by the EC/KBC 109. The CPU 101 first executes the BIOS. The BIOS determines whether any "user"/"supervisor" passwords are registered in the computer 1 (step S301). If no "user" nor "supervisor" passwords are registered (NO in step S301), the BIOS immediately permits the user to use the computer 1 and activates the computer 1 (step S315). In step S315, a resume process or a bootstrap operation of the operating system is executed.

If either the "user" password or "supervisor" password is registered (YES in step S301), the BIOS executes the user verification process. The BIOS provides two user verification methods, one being a method of using password input, and the other being a method of using an SD token.

The BIOS first determines whether or not the SD card 21 (SD token) is attached to the computer 1 (step S302). If the SD card 21 is attached (YES in step S302), the BIOS reads the verification information stored in the SD card 21 (Step S303) and executes, on the basis of the read verification information, the verification process to determine whether the current user is to be permitted to use the computer 1 (step S304). In step S304, based on the read verification information, it is determined whether the SD card 21 is a valid SD token. Specifically, in step S304, the BIOS executes, for instance, a process to determine whether token identification information corresponding to the read verification information is present in the BIOS-ROM 108, or a process to determine whether the read verification information coincides with the "user"/"supervisor" password registered in the BIOS-ROM 108.

If it is determined that the SD card 21 is a valid SD token (YES in step S305), the use of the computer 1 by the user is permitted. In this case, the BIOS reads the policy information and user authority level information stored in the SD card 21, thereby to determine the functions that are executable by the current user (step S306), following which the BIOS activates the computer 1 (step S307). In step S307, a resume process or a bootstrap operation for activating the operating system is executed. After the computer 1 is activated, the BIOS or the password utility program executes the process for restricting the user operations on the basis of the policy information and user authority level information read from the SD card 21 (step S308).

Specifically, when the authority level of the current user specified by the user authority level information is "user", the functions executable by the "user" is restricted by the policy information read from the SD card 21.

Now consider an environment in which each of a plurality of computers is shared by more than one person. Assume that the aforementioned BIOS and password utility program are installed in each computer. Each user can use any one of the computers by using his/her own SD token. In this case, each user whose authority level is "user" is subjected to the same user operation restriction specified by the policy information stored in his/her own SD token, whichever computer he/she uses. Of course verification information (e.g., password, codes bio-informatics or the like) must be stored in each computer so that the input verification information may be checked by each computer being accessed against a stored value of the verification information. Thus, the plural computers can uniformly be managed without the need to individually set the operation restriction information corresponding to each user in each computer. Further, since the content of policy information to.be stored in the SD token can be changed, the content of the user operation restriction can be changed individually for each of the users whose authority level is "user".

If the authority level of the current user specified by the user authority level information is "supervisor", the executable functions are basically not restricted.

If the SD card 21 (SD token) is not attached to the computer 1 (NO in step S302), the BIOS accepts password input by the user. When the user inputs the password by typing through the keyboard 13 (YES in step S309), the BIOS compares the input password with the "user"/"supervisor" password registered in the computer 1. Thereby, the BIOS executes the password verification process to determine whether the current user is to be permitted to use the computer 1 (step S310). In the password verification process, if the input password coincides with the "user"/"supervisor" password registered in the computer 1, the current user is permitted to use the computer 1.

In this case, in order to determine the functions that can be executed by the current user, the BIOS reads out of the BIOS-ROM 108 the user authority level information and default policy information corresponding to the registered password that coincides with the input password (step S312). Then, the BIOS activates the computer 1 (step S313). In step S313, a resume process or a bootstrap operation for activating the operating system is executed. After the computer 1 is activated, the BIOS or the password utility program executes the process for restricting the user operations on the basis of the policy information and user authority level information read from the BIOS-ROM 108 (step S314).

In short, when the password verification is utilized, the functions executable by the user whose authority level is "user" are restricted not by the policy information stored in the SD token 21, but by the policy information stored in the BIOS-ROM 108.

As has been described above, according to the present embodiment, the SD token stores not only the verification information but also the policy information. Thus, the user operation restriction can be effected in association with each of SD tokens used for verification. Thus, even in an environment where each of a plurality of computers is used by a plurality of persons, the plural computers can uniformly be managed without the need to individually set in each computer the operation restriction information corresponding to each user.

Since an SD card having a memory area, where access from a file system is prohibited, is used as a token device, illicit rewriting by unauthorized persons of token data stored in the token device can be prevented.

## Claims

1. An information processing apparatus having a token input (16) for detachable connection to a token device (21), **characterized by** comprising:
means (101, S111) for storing, in the token device (21), token data including verification information for' permitting use of the information processing apparatus and policy information for restricting operations of a user who uses the information processing apparatus;
means (101, S303, S304,S305) for determining whether use of the information processing apparatus is to be permitted or not, on the basis of the verification information stored in the token device (21); and
means (101, S308) for restricting, when the determining means (101, S303, S304,S305) determines that the use of the information processing apparatus is permitted, functions of the information processing apparatus that can be used by the user who uses the information processing apparatus, on the basis of the policy information stored in the token device (21).

2. The information processing apparatus according to claim 1, **characterized in that** the policy information includes information indicating whether the user is permitted to use each of a plurality of preset functions of the information processing apparatus.

3. The information processing apparatus according to claim 1, **characterized in that** the policy information includes at least information indicating whether use of a function of changing a setting of an operational environment of the information processing apparatus is permitted or.not.

4. The information processing apparatus according to claim 1, **characterized in that** the token data further includes authority level information indicating a authority level of the user who uses the information processing apparatus, and
the restricting means (101, S308) includes means for restricting the functions of the information processing apparatus that can be used by the user who uses the information processing apparatus, on the basis of the authority level information and the policy information stored in the token device (21).

5. The information processing apparatus according to claim 1, **characterized by** further comprising means (S209) for executing a policy changing process for changing a content of the policy information to be written in the token device (21) in accordance with a user operation,
wherein the token data includes authority level information indicating a authority level of the user who uses the information processing apparatus, and
the restricting means (101, S308) includes:
means for determining whether the authority level of the user who uses the information processing apparatus is a predetermined authority level corresponding to a supervisor user, on the basis of the authority level information stored in the token device (21); and
means for prohibiting execution of the policy changing process when the authority level of the user who uses the information processing apparatus is not said predetermined authority level.

6. The information processing apparatus according to claim 5, **characterized in that** the means (S209) for executing the policy changing process includes:
means for causing a display device (121) of the information processing apparatus to display a screen for setting the content of the policy information; and
means for determining the content of the policy information to be stored in the token device (21) in accordance with an operation on the screen.

7. The information processing apparatus according to claim 1, **characterized in that** the determining means (101, S303, S304,S305) includes:
means (S301) for determining, upon power-on of the information processing apparatus, whether a password is registered in the information processing apparatus;
means (S302) for determining, when the password is registered in the information processing apparatus, whether the token device (21) is connected to the information processing apparatus;
means (S303, S304,S305) for determining, when the token device (21) is connected to the information processing apparatus, whether use of the information processing apparatus is to be permitted on the basis of the verification information stored in the token device (21) connected to the information processing apparatus; and
means (S309, S310, S311) for determining, when the token device (21) is not connected to the information processing apparatus, whether use of the information processing apparatus is to be permitted on the basis of the registered password and a password input by the user by operating a keyboard of the information processing apparatus .

8. The information processing apparatus according to claim 1, **characterized in that** the token device (21) includes a memory area (34) where access from a file system of the information processing apparatus is prohibited, and
the storing means (101, S111) includes means for storing the token data in the memory area (34) of the token device (21).

9. The information processing apparatus according to claim 1, **characterized in that** the token device (21) is connected to said information processing apparatus and includes a first memory area (34) where access from a file system of the information processing apparatus is prohibited, and a second memory area (35) where access from the file system is permitted, and
the storing means (101, S111) includes means for storing the token data in the first memory area (34) of the token device (21).

10. A method of restricting operations of a user of an information processing apparatus by using a token device (21) that is detachably capable to be connected to the information processing apparatus, **characterized by** comprising:
storing (S101), in the token device (21) connected to the information processing apparatus, token data including verification information for permitting use of the information processing apparatus and policy information for restricting operations of a user who uses the information processing apparatus;
determining (S303, S304,S305) whether use of the information processing apparatus is to be permitted or not, on the basis of the verification information stored in the token device (21) connected to the information processing apparatus; and
restricting (S308), when it is determined that the use of the information processing apparatus is permitted, functions of the information processing apparatus that can be used by the user who uses the information processing apparatus, on the basis of the policy information stored in the token device (21) connected to the information processing apparatus.

11. The method according to claim 10, **characterized in that** the policy information includes information indicating whether the user is permitted to use each of a plurality of preset functions of the information processing apparatus.

12. The method according to claim 10, **characterized in that** the policy information includes at least information indicating whether use of a function of changing a setting of an operational environment of the information processing apparatus is permitted or not.

13. The method according to claim 10, **characterized in that** the token data further includes authority level information indicating a authority level of the user who uses the information processing apparatus, and
said restricting (S308) includes restricting the functions of the information processing apparatus that can be used by the user who uses the information processing apparatus, on the basis of the authority level information and the policy information stored in the token device (21) connected to the information processing apparatus.

14. The method according to claim 10,
**characterized by** further comprising the steps of:
executing (S209) a policy changing process for changing a content of the policy information to be written in the token device (21) in accordance with a user operation,
wherein the token data includes authority level information indicating a authority level of the user who uses the information processing apparatus, and
said restricting (S308) includes:
determining whether the authority level of the user who uses the information processing apparatus is a predetermined authority level corresponding to a supervisor user, on the basis of the authority level information stored in the token device (21) connected to the information processing apparatus; and
prohibiting execution of the policy changing process when the authority level of the user who uses the information processing apparatus is not said predetermined authority level.

15. The method according to claim 14, **characterized in that** said executing (S209) of the policy changing process includes:
causing a display device (121) of the information processing apparatus to display a screen for setting the content of the policy information; and
determining the content of the policy information to be stored in the token device (21) in accordance with an operation on the screen.

16. The method according to claim 10, **characterized in that** said determining (S303, S304, S305) includes:
determining (S301), upon power-on of the information processing apparatus, whether a password is registered in the information processing apparatus;
determining (S302), when the password is registered in the information processing apparatus, whether the token device (21) is connected to the' information processing apparatus;
determining (S303, S304, S305), when the token device (21) is connected to the information processing apparatus, whether use of the information processing apparatus is to be permitted on the basis of the verification information stored in the token device (21) connected to the information processing apparatus; and
determining (S309, S310, S311), when the token device (21) is not connected to the information processing apparatus, whether use of the information processing apparatus is to be permitted on the basis of the registered password and a password input by the user by operating a keyboard of the information processing apparatus .

17. The method according to claim 10, **characterized in that** the token device (21) includes a memory area (34) where access from a file system of the information processing apparatus is prohibited, and
said storing (S111) includes storing the token data in the memory area (34) of the token device (21).

18. The method according to claim 10, **characterized in that** the token device (21) includes a first memory area (34) where access from a file system of the information processing apparatus is prohibited, and a second memory area (35) where access from the file system is permitted, and
said storing (S111) includes storing the token data in the first memory area (34) of the token device (21).
